# EUROPEAN PATENT SPECIFICATION

(11) **EP 0 736 947 B1**
(45) Date of publication and mention of the grant of the patent: **14.05.2003**
(21) Application number: 96104836.0
(22) Date of filing: 27.03.1996
(51) Int. Cl.: H02H 7/085

(54) **Overload protection arrangement for DC power loads**
Überlastschutzvorrichtung für Gleichstromlasten
Protection contre la surcharge des charges à courant continu

(30) Priority: 06.04.1995 IT PN950020
(43) Date of publication of application: 09.10.1996
(73) Proprietor: GE Power Controls Italia S.p.a., I-20144 Milan (IT)
(72) Inventor: Candaten, Alberto, 32100 Belluno (IT); Cigana, Fiorenzo, 30026 Portogruaro, Venezia (IT); Tobio, Stefano, 30026 Santa Maria di Sala, Venezia (IT)
(74) Representative: Giugni, Valter

(56) References cited:
- DE-A- 3 048 989
- GB-A- 2 053 513
- US-A- 4 678 975
- PATENT ABSTRACTS OF JAPAN vol. 010, no. 133 (E-404), 17 May 1986 & JP-A-60 261388 (FUJI SHASHIN FILM KK), 24 December 1985,

## Description

The present invention refers to an arrangement for the overload protection of electric loads operating on a dc power supply, in particular such electric loads operating on a reversible-polarity power supply as used especially in the power servocontrol systems equipping modern motor vehicles.

Although the present invention refers particularly to servocontrol systems for the operation of power windows, centralized automatic door and bonnet locking systems, power-adjustable rearview or driving mirrors and the like, and although for greater simplicity in illustrating and exemplifying the invention the following description refers actually to such a type of application, it will be appreciated that the present invention may as well be advantageously applied to other types of uses and functions when these are powered off a dc power supply.

A number of overload protection arrangements for dc power loads are known in the art. Generally, such arrangements are dedicated to the detection of excess voltage or current being absorbed by power loads operating under otherwise uncontrolled conditions of continuity, such as disclosed for instance in the patent application DE 4320352, priority 19.03.1993, filed by ITT AUTOMOTIVE EURO GmbH.

Such a document proposes an overload protection arrangement by means of a particularly quick-acting device, which however fails to protect against excessively long operation or actuation times.

There is in fact a particular category of applications, ie. of power-operated facilities equipping modern motor vehicles, which exibit distinct peculiarities in the way in which they are used. There are in fact such facilities as for instance the power-operated actuation of the door windows (ie. the so-called power windows) or the automatic locking or release of all door locks upon actuation of a single lock (centralized locking function), which are provided with electric driving motors that are actuated either directly by the user or in an automatic manner (under control of limit switches or similar means) for the very short time generally needed to perform their duty or complete their function.

Furthermore, such power loads are also intended to perform either reversible actuations, such as the opening or the closing of the power-operated windows, or even one-way actuations, as this is for instance the case in the opening-only actuation of the rear bonnet since the closing and consequent locking thereof are performed manually by the user.

The peculiarity of all such motors lies in the fact that they are sized and made so as to be able to perform their function in a quite limited period of time, since this is what their duty actually involves, so that they are sized and designed, both functionally and thermally, only to cope with a duty.

It therefore ensues that, if the power load involved is actuated to operate for a prolonged period of time, ie. a time exceeding the longest allowable one set by the design, the motor is not able to withstand such an overload condition, which is essentially a time, and therefore thermal and not necessarily power overload condition, and eventually breaks down, since such a failure condition is not prevented or protected by the well-known overload protection arrangements generally used in the art.

Various types of arrangements are on the other hand known for use as a protection against prolonged operating times which may not only be the result of a prolonged actuation, but also be brought about either by some impediment hindering the actuated means from moving regularly and, as a result, actuating the respective limit switches, or by some failure occurring in the central control arrangement or unit so that the latter keeps the power load energized even after the duty thereof is terminated.

In this connection, a particular type of thermal cutout integrated in the central control unit, and responding to overtemperatures brought about by a prolonged operation, is cited. The tripping of such a thermal cutout arrangement causes the circuit being protected to open to re-establish safety conditions. Once tripped, however, such a protection arrangement cannot be reset, so that the whole central control unit must be replaced under unsustainably high costs.

A further type of overload protection is ensured by the so-called "poly-switch", ie. an element which is connected in series with the power supply and the characteristic of which lies in the fact that its resistance increases with temperature increases (PTC). Such a solution, however, tends to exibit a type of operation which is excessively variable with ambient conditions, which may in fact vary even to a very great extent. Furthermore, resetting regular operating conditions may be extremely time-consuming.

A solution is also known which is based on the use of an additional relay which is controlled by an error or failure signal from the central control unit. Such a solution has actually proven quite effective, but also quite burdensome from both a technical and economical standpoint. Furthermore, it implies the addition of a further risk represented by the relay contacts possibly getting stuck.

From GB 2053513 a circuit arrangement is known, comprising an operating switch, a motor connectible to a voltage source, a switching element; the power required by said motor is detected and when said power increases and exceeds a predetermined value, a signal for controlling the switching element is released. However, said circuit arrangement is unable to measure the lengh of the working time of said switching element, and even more it is unable to detect whether said working time exceeds a predetermined time lengh.

It would therefore be desirable, and it is in fact a purpose of the present invention as defined in claim 1, to provide an arrangement which is capable of protecting such dc-powered driving motors against excessively prolonging operating times, or against sticking of the relay contacts, or against a malfunction of the central or main control unit itself, and which is simple, reliable, easily resettable without any need for external interventions, and which are capable of being made by putting together essentially unexpensive components under utilization of readily available techniques.

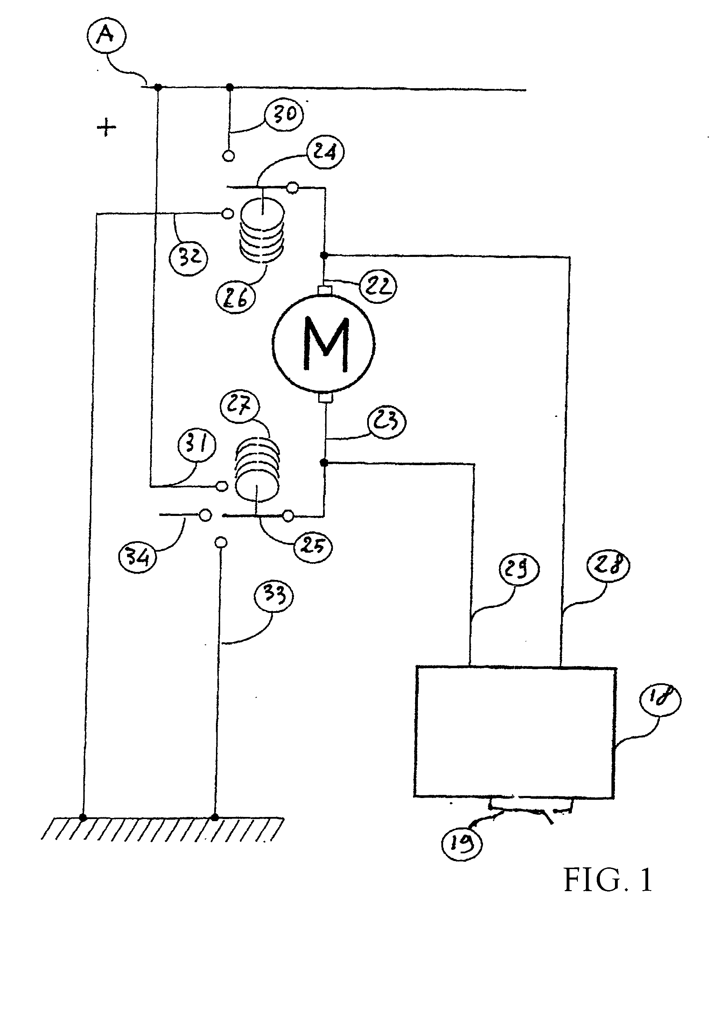

The invention will be more clearly understood from the description which is given below by way of non-limiting example with reference to the accompanying drawings, in which
- Figure 1 is a schematical view of a simplified embodiment of the present invention;

The general term "motor" will be used in the following description to indistinctly mean also any other possible type of power load or actuator. However, such a simplification will not affect the full and clear understandability of the same description, considering the context in which such terms are used, as anyone skilled in the art will readily appreciate. For the same reasons, the term "relay" as used in the following description shall be understood to extend to also cover any other type of static and change-over switches and, anyway, any such type of device or arrangement operating in a similar manner and which is known and readily available in the art.

In the case that the motor M has to be guarded and protected by monitoring the supply voltage, it should be noticed that it can be supplied selectively with either polarity, since its terminals 22 and 23 are connected to two respective changeover switches 24 and 25, each one of which is adapted to selectively connect either polarity of the power supply to the motor, owing to the fact that said changeover switches are actuated by respective relays 26 and 27 that are in turn driven by the central control unit 18 which at the same time detects the voltage at the terminals 22 and 23 of the motor via appropriate connections 28, 29.

Should at this point any of the following conditions occur:
- the actuation command imparted to the switch 19 persists beyond a pre-determined time,
- the switch 24, 25 remain erroneously activated even after the cessation of said actuation command,
- the motor remains energized regardless of said switch 19 having been disconnected,
said control unit 18 works out that the motor has to be put under safety conditions, it will send appropriate actuation commands to the changeover switches 24 and 25, so as to set these switches in such manner as to connect the motor terminals:
- either to the respective terminals 30 and 31 which are connected to the positive pole,
- or to the terminals 32 and 33 which are connected to the negative pole,
- or again to at least a terminal of the motor and a suspended or inactive terminal 34 of any of the afore mentioned relays.

It is fully apparent also in this case that such options as whether to connect or not both relays to the same polarity, which polarity is to be selected and, alternatively, which relay is to be selected in view of suspending or inactivating one of its terminals, are entirely on the discretion and within the capabilities of those skilled in the art, so that they shall not be dealt here any further.

In this connection, it may be just stressed that, in the particular case considered here, since two-way relays and changeover switches are generally simpler and more reliable, it will be preferable to switch a single relay, anyone of them, so that both terminals of the motor are connected to any and same polarity.

The solution can implemented in the case that the motor is to be guarded and protected on the basis of the current input becomes also apparent. In such a case, a shunt resistor (not shown) included in a power supply line to the motor delivers the required control voltage to the central control unit 18 which shall be programmed or set in such a manner as to send the necessary actuation commands to the two relays 26 and 27 in accordance with the desired protection conditions.

## Claims

1. Protection arrangement for a direct-current power load (M), adapted to be connected to a power supply source comprising a reversing switch means included in a power supply line to said power load, an actuating switch (19) for the actuation of said arrangement, **characterized in that**:
- said reversing switch means is adapted to connect both terminals of said power load (M) to a same polarity of the power supply upon occurence of definite electric conditions that are detectable by a central control unit (18), and comprises respective changeover switches (24,25) that are actuatable by respective relay means (26, 27) able to be operated separately by said central control unit (18),
- said relay means being included in a respective power supply line to said power load (M) and being further adapted to be switched in a first setting connecting a definite power-supply polarity to a definite terminal of said power load, and a second setting connecting the opposite polarity of the power supply to the same above-cited terminal of said power load;
- said control unit (18) being connected to said actuating switch (19), and, by two electric links (28, 29) to the respective polarities (22,23) of said direct-current power load (M)
- said central control unit (18) being provided with a built-in programmed logic and being adapted to operate said relay means (26,27) depending on the existence of definite conditions having been detected by said electric links (28, 29), said definite conditions being at least one of the following ones:
- the actuation command on the reversible actuating switch (19) is prolonged beyond a predetermined length of time,
- upon the de-energization of said actuating switch (19), the power load (M) keeps being energized,
- the polarities across said power load (M) are not corresponding to the positioning of said reversible actuating switch (19).

2. Protection arrangement according to claim 1, **characterized in that** a shunt resistor is connected in series to the power load, two connections being provided at the respective terminals of said shunt resistors so as to transmit the value of the voltage across said resistor to said central control unit (18).

## Patentansprüche

1. Schützvorrichtung für ein Gleichstrom-Verbrauchsgerät (M) zum Anschluß an eine Stromversorgungsquelle mit in einer Stromversorgungslinie zum genannten Gleichstrom-Verbrauchsgerät zwischengeschalteten Umschaltermitteln und einem zur Betätigung der genannten Schützvorrichtung vorgesehenen Betätigungsschalter (19), **dadurch gekennzeichnet, daß**:
- die genannten Umschaltermittel dazu geeignet sind, beide Anschlußklemmen des genannten Gleichstrom-Verbrauchsgeräts (M) beim Zustandekommen bestimmter elektrischen, durch eine zentrale Steuereinheit (18) erfaßbaren Bedingungen an einen selben Pol der Stromversorgungsquelle anzuschließen, und dazu gehörige, durch jeweilige von der genannten zentralen Steuereinheit (18) getrennt ein- und ausschaltbare Relaismittel (26, 27) betätigbare Umschalter (24, 25) umfassen,
- wobei die genannten Relaismittel in einer jeweiligen Stromversorgungslinie zum genannten Gleichstrom-Verbrauchsgerät (M) zwischengeschaltet und ferner dazu geeignet sind, auf eine erste Schaltstellung, in der sie einen bestimmten Stromversorgungspol mit einer bestimmten Anschlussklemme des genannten Gleichstrom-Verbrauchsgeräts in Verbindung setzen, sowie auf eine zweite Schaltstellung, in der sie den Gegenpol der Stromversorgung mit derselben o.g. Anschlußklemme des genannten Gleichstrom-Verbrauchsgeräts in Verbindung setzen, geschaltet zu werden,
- wobei die genannte Steuereinheit (18) mit dem genannten Betätigungsschalter (19) und durch zwei elektrischen Glieder (28, 29) mit den jeweiligen Polen (22, 23) des genannten Gleichstrom-Verbrauchsgeräts (M) verbunden ist,
- wobei die genannte Steuereinheit (18) mit einer eingespeicherten programmierten Logik versehen und dazu geeignet ist, die genannten Relaismittel (26, 27) infolge des Vorhandenseins bestimmter von den genannten elektrischen Gliedern (28, 29) erfaßten Bedingungen zu betreiben, wobei die genannten bestimmten Bedingungen zumindest einem der folgenden Zustände entsprechen:
- die auf den reversiblen Betätigungsschalter (19) ausgeübte Betätigung (19) dauert länger als eine vorbestimmten Zeitspanne,
- das Gleichstrom-Verbrauchsgerät (M) beim Ausschalten des o.g. Betätigungsschalters (19) bleibt im eingeschalteten Zustand,
- die am genannten Gleichstrom-Verbrauchsgerät (M) angelegten Polaritäten entsprechen nicht der Regelstellung des genannten reversiblen Betätigungsschalters (19).

2. Schützvorrichtung nach Anspruch 1, **dadurch gekennzeichnet, daß** ein Nebenwiderstand in Reihe mit dem Gleichstrom-Verbrauchsgerät geschaltet ist, wobei zwei Anschlüße an den jeweiligen Anschlußklemmen des genannten Nebenwiderstands zur Übertragung des am selben Nebenwiderstand angelegten Spannungswertes auf die genannte Zentralsteuereinheit (18) vorgesehen sind.

## Revendications

1. Dispositif de protection pour une charge électrique en courant continu (M), apte à être connecté à une source d'alimentation en courant comprenant un moyen interrupteur inverseur inclus dans une ligne d'alimentation en courant de ladite charge électrique et un interrupteur d'actionnement (19) pour actionner ledit dispositif, **caractérisé en ce que:**
- ledit moyen interrupteur inverseur est apte à connecter les deux bornes terminaux de ladite charge électrique (M) à une même polarité de l'alimentation en courant au cas où se vérifieraient certaines conditions qui sont détectables par une unité centrale de contrôle (18), et comprend des commutateurs respectifs (24, 25) qui sont actionnables par des moyens de relais respectifs (26, 27) qui sont aptes à être commandés séparément par ladite unité centrale de contrôle (18),
- lesdits moyens de relais étant inclus dans une ligne respective d'alimentation en courant à ladite charge électrique (M) et étant aussi aptes à être commutés dans une première position connectant une polarité définie de l'alimentation en courant à une borne terminale définie de ladite charge électrique, et dans une seconde position connectant la polarité opposée de l'alimentation en courant à la même borne terminale susmentionnée de ladite charge électrique;
- ladite unité de contrôle (18) étant connectée audit interrupteur d'actionnement (19) et, par deux éléments de liaison électriques (28, 29), aux polarités respectives (22, 23) de ladite charge électrique en courant continu (M),
- ladite unité centrale de contrôle (18) étant pourvue d'une logique programmée résidante et étant apte à actionner lesdits moyens de relais (26, 27) en fonction de l'existence de conditions définies qui ont été détectées par lesdits éléments de liaison électriques (28, 29), lesdites conditions définies étant au moins une des suivantes:
- la commande d'actionnement sur l'interrupteur d'actionnement (19) est prolongée pour une durée supérieure à un laps de temps prédéterminé,
- lorsque ledit interrupteur d'actionnement (19) est débranché, la charge électrique (M) reste branchée,
- les polarités aux extrémités de ladite charge électrique (M) ne correspondent pas à la position de réglage dudit interrupteur d'actionnement (19).

2. Dispositif de protection selon la revendication 1, **caractérisé en ce qu'**une résistance en dérivation est connectée en série à ladite charge électrique, deux connexions étant prévues aux extrémités respectives de ladite résistance en dérivation de façon telle à transmettre la valeur de la tension aux extrémités de ladite résistance à ladite unité centrale de contrôle (18).
